# EUROPÄISCHE PATENTSCHRIFT

(11) **EP 1 868 282 B1**
(45) Veröffentlichungstag und Bekanntmachung des Hinweises auf die Patenterteilung: **18.06.2014**
(21) Anmeldenummer: 07007672.4
(22) Anmeldetag: 14.04.2007
(51) Int. Cl.: H02K 7/08

(54) **Außenläufermotor**
External rotor engine
Moteur à rotor extérieur

(30) Priorität: 14.06.2006 DE 102006027566
(43) Veröffentlichungstag der Anmeldung: 19.12.2007
(73) Patentinhaber: AMK Arnold Müller GmbH & Co.KG, 73230 Kirchheim / Teck (DE)
(72) Erfinder: Gause, Alfred, 73666 Hohengehren (DE)
(74) Vertreter: Bartels & Partner

(56) Entgegenhaltungen:
- EP-A- 0 582 563
- EP-A2- 0 945 967
- WO-A-03/084029
- WO-A-2004/110760
- CA-A1- 2 417 405
- DE-A1- 19 928 247
- DE-C1- 19 958 545
- FR-A- 2 847 395
- GB-A- 2 202 386

## Beschreibung

Die Erfindung betrifft einen Außenläufermotor mit den Merkmalen in Oberbegriff von Anspruch 1.

Solche als Außenläufermotoren konzipierte Elektromotoren mit den Stator außen umschließendem Rotor werden u. a. als Servomotoren in Werkzeugmaschinen, Druckerpressen und zu beliebigen Stellzwecken, u. a. im Fahrzeugbau, eingesetzt. Servomotoren werden in einem geschlossenen Regelkreis betrieben, wozu die Drehposition oder Drehwinkellage des Rotors mittels eines im Motor integrierten Positionsgebers erfasst wird. Da solche Außenläufermotoren in großen Stückzahlen in sehr verschiedenen Applikationen eingesetzt werden, ist neben der Anforderung an hochgenauer, wenig toleranzbehafteter Stellzuverlässigkeit ein kleines Einbauvolumen und ein niedriger Gestehungspreis unabdingbar.

Die DE 199 58 545 C1 offenbart einen Außenläufermotor mit einem Stator, einem Rotor und einem Positionsgeber, der ein feststehendes Geberaußenteil und ein drehendes Geberinnenteil aufweist, wobei der Positionsgeber in einer den Stator tragenden, feststehenden, mehrteiligen Lagereinrichtung aufgenommen und der drehende Geberinnenteil fest mit dem Rotor verbunden ist. Axial neben der Lagereinrichtung ist der Positionsgeber auf der gleichen Seite wie eine Befestigung der Lagereinrichtung angeordnet. Die Lagereinrichtung stützt eine zentrale rotierende Welle, auf deren Ende das Geberinnenteil außenseitig befestigt ist.

Der Erfindung liegt die Aufgabe zugrunde, einen auch als Servomotor einsetzbaren, für Dauerbelastung geeigneten Außenläufermotor kompakt und bauraumklein bei niedrigen Fertigungskosten zu konzipieren.

Die Aufgabe ist erfindungsgemäß durch die Merkmale des Anspruchs 1 gelöst.

Der erfindungsgemäße Außenläufermotor mit den Merkmalen des Anspruchs 1 hat den Vorteil, dass der Positionsgeber ohne jeglichen zusätzlichen Raumbedarf in den Motor integriert ist, so dass die Abmessungen des Motors sich durch dessen Einbau nicht verändern. Die Signalleitungen des Positionsgebers können fertigungstechnisch kostengünstig durch die hohle, feststehende Welle hindurchgeführt und mit einer entsprechenden Steuereinheit verbunden werden.

Zweckmäßige Ausführungsformen des erfindungsgemäßen Elektromotors mit vorteilhaften Weiterbildungen und Ausgestaltungen der Erfindung sind in den weiteren Ansprüchen angegeben.

Vorteilhaft ist vorgesehen, dass durch Heranziehen der feststehenden Welle zur Ableitung der im Stator anfallenden Wärme die Dauerbelastbarkeit des Außenläufermotors beträchtlich erhöht wird, ohne dass seine kompakte Bauform angetastet wird; denn die Wärmeableitung nutzt bereits vorhandene Komponente und erfordert keine Zusatzelemente.

Gemäß einer vorteilhaften Ausführungsform der Erfindung ist für eine effektive Kühlung des Stators im Statorbereich der Welle ein Kühlmittel-Umlaufkanal ausgebildet. Über einen Kühlmittel-Zulaufkanal und einen Kühlmittel-Ablaufkanal die ebenfalls in der feststehenden Welle ausgebildet und aus der Welle herausgeführt sind, wird in dem Kühlmittel-Umlaufkanal ein die Wärme im Stator aufnehmendes Kühlmittel umgewälzt. Vorzugsweise sind Zulauf- und Ablaufkanal als Axialbohrungen ausgeführt, in deren in derselben Wellenstirn liegende Mündungen Anschlussstutzen zum Anschließen an einen Kühlmittelkreislauf eingesetzt sind. Der Kühlmittel-Umlaufkanal kann mit spiralförmigem Verlauf oder ringförmigem Verlauf um die Wellenachse herum ausgebildet sein. Ein minimaler Abstand der in Radialrichtung außen liegenden Kanalwände des Kühlmittel-Umlaufkanals von der Wellenoberfläche maximiert den Wärmeübergang vom Stator zum Kühlmittel.

Die Erfindung ist anhand eines in der Zeichnung dargestellten Ausführungsbeispiels im Folgenden näher beschrieben. Es zeigen:
- Fig. 1: einen Längsschnitt eines als Außenläufermotor konzipierten Elektromotors; und
- Fig. 2: eine perspektivische Ansicht des Außenläufermotors in Richtung Pfeil 11 in Fig. 1.

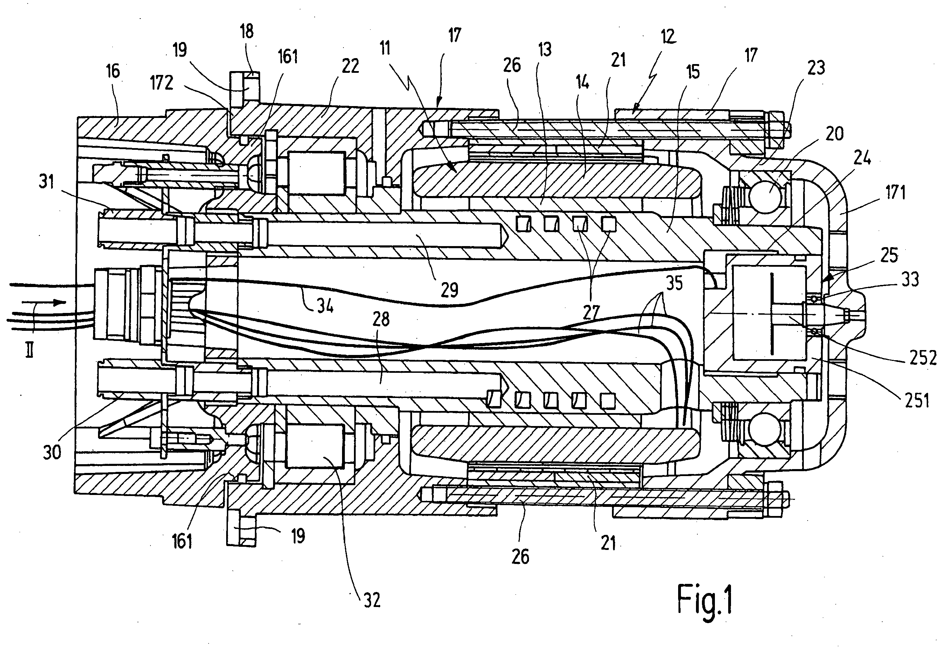

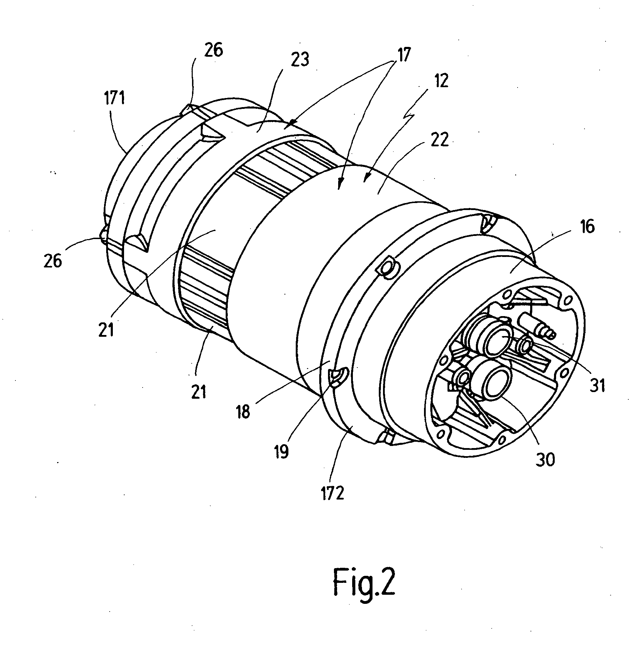

Der in Fig. 1 im Schnitt und in Fig. 2 in perspektivischer Unteransicht dargestellte Elektromotor ist ein sog. Außenläufermotor mit einem Stator 11 und einem Rotor 12, der den Stator 11 mit Radialluftspalt außen konzentrisch umschließt. Der Stator 11 weist in bekannter Weise ein genutetes Statorblechpaket 13 auf, in dessen Nuten eine Statorwicklung 14 eingelegt ist. Die Statorwicklung 14 mit ihren stirnseitig über das Statorblechpaket 13 hinausragenden Wickelköpfen ist in Fig. 1 nur schematisch dargestellt. Das Statorblechpaket 13 ist auf eine feststehende, hohle Welle 15 aufgepresst, die an einem Wellenende in einem Anbauflansch 16 befestigt ist. Der Anbauflansch 16 dient zum Einbau des Elektromotors in eine Werkzeugmaschine, einer Druckerpresse oder einer sonstigen Arbeitsmaschine.

Der Rotor 12 besitzt ein kappenförmiges Rotorgehäuse 17, das mit seinem Kappenboden 171 das vom Anbauflansch 16 abgekehrte, freie Wellenende der Welle 15 überdeckt und mit seinem Kappenrand 172 einen am Einbaumodul 16 ausgebildeten, durchmesserkleineren Führungsstutzen 161 übergreift. Das Rotorgehäuse 17 trägt am Kappenrand 172 einen Befestigungsflansch 18 mit in Umfangsrichtung voneinander beabstandeten Durchgangslöchern 19, die zum Befestigen einer vom Rotor 12 anzutreibenden Last dienen. Das Rotorgehäuse 17 ist einerseits nahe dem Anbauflansch 16 über ein als Hauptlager für die am Befestigungsflansch 18 angebundene Last dienendes Rollenlager 32 und andererseits nahe dem Kappenboden 171 über ein Kugellager 20 auf der Welle 15 abgestützt. Es trägt im Bereich des Stators 11 mehrere gleichmäßig am Umfang verteilt angeordnete Permanentmagnete 21, deren axiale Länge etwa der axialen Länge des Statorblechpakets 13 entspricht. Das kappenförmige Rotorgehäuse 17 ist aus zwei Gehäuseteilen zusammengesetzt, und zwar aus einem hinteren Zylinderteil 22 und aus einem vorderen Kappenteil 23, die durch Schraubbolzen 26 miteinander verspannt sind und gleichzeitig die Permanentmagnete 21 zwischen sich einspannen. Das vom Kappenteil 23 abgekehrte Ende des Zylinderteils 22 bildet den Kappenrand 172, und der Kappenboden 171 ist Teil des Kappenteils 23.

In die vom Kappenboden 171 überdeckte Stirnseite des freien, vom Anbauflansch 16 abgekehrten Wellenendes der Welle 15 ist eine zentrale Aussparung 24 eingebracht. In diese Aussparung 24 ist ein Positionsgeber 25 eingesetzt, der einen feststehenden Geberaußenteil 251 und einen drehenden Geberinnenteil 252 aufweist. Der feststehende Geberaußenteil 251 ist in der Aussparung 24 festgesetzt, und der über ein Kugellager 33 im Geberaußenteil 251 gelagerte Geberinnenteil 252 ist am Kappenboden 171 befestigt. Eine zu dem Positionsgeber 25 führende Signalleitung 34 und zu der Statorwicklung 14 führende elektrische Anschlussleitungen 35 sind in der hohlen Welle 15 verlegt und an derem im Anbauflansch 16 aufgenommenen Wellenende aus der Welle 15 herausgeführt.

Zur Erhöhung der Dauerbelastungsfähigkeit des Außenläufermotors wird die in der Statorwicklung 14 anfallende Wärme über die feststehende Welle 15 abgeführt. Dies erfolgt mittels eines Kühlmittels, bevorzugt Wasser, das über die Welle 15 an den Stator 11 herangeführt wird. Hierzu ist in der Welle 15, genauer gesagt in der Wandung der hohlen Welle 15, ein Kühlmittel-Umlaufkanal 27 ausgebildet, der sich spiralförmig um die Wellenachse herum über den Sitzbereich des Statorblechpakets 13 auf der Welle 15 erstreckt. Des weiteren sind in der Wandung der hohlen Welle 15 ein Kühlmittel-Zulaufkanal 28 und ein Kühlmittel-Ablaufkanal 29 ausgebildet, die jeweils mit einem Ende des Kühlmittel-Umlaufkanals 27 verbunden sind. Zulauf- und Ablaufkanal 28, 29 sind als axiale Bohrungen ausgeführt, die von der Stirnseite des in den Anbauflansch 16 eingespannten Wellenendes her eingebracht sind. In die wellenstirnseitigen Öffnungen der Bohrungen sind Anschlussstutzen 30, 31 eingesetzt. Um den Wärmeübergang vom Stator 11 bzw. vom Statorblechpaket 13 zu dem im Kühlmittel-Umlaufkanal 27 strömenden Kühlmittel zu verbessern, ist der Kühlmittel-Umlaufkanal 27 so ausgebildet, dass die in Radialrichtung außen liegenden Kanalwände einen minimalen Abstand von der Wellenoberfläche und damit vom Statorblechpaket 13 haben. Alternativ kann der Kühlmittel-Umlaufkanal auch als Ringkanal ausgebildet sein, der konzentrisch zur Wellenachse angeordnet ist und eine über den Sitzbereich des Stators 11 sich erstreckende Kanalbreite aufweist.

## Patentansprüche

1. Außenläufermotor mit einem Stator (11), einem Rotor (12) und einem Positionsgeber (25), der ein feststehendes Geberaußenteil (251) und ein drehendes Geberinnenteil (252) aufweist, wobei der Positionsgeber (25) in einer den Stator (11) tragenden, feststehenden Welle (15) aufgenommen und der drehende Geberinnenteil (252) fest mit dem Rotor (12) verbunden ist, **dadurch gekennzeichnet, dass** der Positionsgeber (25) in einer in eine Stirnseite eines Wellenendes der Welle (15) eingebrachten Aussparung (24) aufgenommen ist und dass eine zu dem Positionsgeber (25) führende Signalleitung (34) durch die hohl ausgeführte Welle (15) hindurchverlegt ist.

2. Außenläufermotor nach Anspruch 1, **dadurch gekennzeichnet, dass** der Stator (11) auf der Welle (15) festgelegt, vorzugsweise aufgepresst, ist und dass im Stator (11) anfallende Wärme über die Welle (15) abgeführt ist.

3. Außenläufermotor nach Anspruch 2, **dadurch gekennzeichnet, dass** ein Positionsgeber (25) mit einem feststehenden Geberaußenteil (251) und einem drehenden Geberinnenteil (252) in der feststehenden Welle (15) aufgenommen und der drehende Geberinnenteil (252) fest mit dem Rotor (12) verbunden ist.

4. Außenläufermotor nach einem der Ansprüche 1 bis 3, **dadurch gekennzeichnet, dass** die feststehende Welle (15) mit ihrem einen Wellenende in einem Anbauflansch (16) befestigt ist.

5. Außenläufermotor nach Anspruch 4, **dadurch gekennzeichnet, dass** der Positionsgeber (25) in der in die Stirnseite des vom Anbauflansch (16) abgekehrten Wellenendes eingebrachten Aussparung (24) aufgenommen ist.

6. Außenläufermotor nach einem der Ansprüche 1 bis 5, **dadurch gekennzeichnet, dass** der Rotor (12) ein auf der Welle (15) drehbar gelagertes, kappenförmiges Rotorgehäuse (17) mit Kappenboden (171) und Kappenrand (172) aufweist und dass der im feststehenden Geberaußenteil (251) drehbar gelagerte Geberinnenteil (252) zentral am Kappenboden (171) befestigt ist.

7. Außenläufermotor nach Anspruch 6, **dadurch gekennzeichnet, dass** das Rotorgehäuse (17) einerseits nahe dem Kappenboden (171) und andererseits nahe dem Kappenrand (172) über jeweils ein Wälzlager auf der feststehenden Welle (15) abgestützt ist.

8. Außenläufermotor nach Anspruch 6 oder 7, **dadurch gekennzeichnet, dass** das Rotorgehäuse (17) am Kappenrand (172) einen Befestigungsflansch (18) zum Anbinden einer vom Rotor (12) anzutreibenden Last trägt.

9. Außenläufermotor nach Anspruch 8, **dadurch gekennzeichnet, dass** das nahe dem Kappenrand (172) angeordnete Wälzlager das Hauptlager der an dem Befestigungsflansch (18) angebundenen Last bildet und vorzugsweise als Rollenlager (32) ausgebildet ist.

10. Außenläufermotor nach einem der Ansprüche 2 bis 9, **dadurch gekennzeichnet, dass** die Welle (15) einen Kühlmittel-Zulaufkanal (28) und einen Kühlmittel-Ablaufkanal (29) aufweist, die mit einem im Statorbereich der Welle (15) ausgebildeten Kühlmittel-Umlaufkanal verbunden und aus der Welle (15) herausgeführt sind.

11. Außenläufermotor nach Anspruch 10, **dadurch gekennzeichnet, dass** die in Radialrichtung außen liegenden Kanalwände des Kühlmittel-Umlaufkanals (27) einen minimalen Abstand von der Oberfläche der feststehenden Welle (15) aufweisen.

12. Außenläufermotor nach Anspruch 10 oder 11, **dadurch gekennzeichnet, dass** der Kühlmittel-Umlaufkanal (27) sich spiralförmig um die Wellenachse herum über den Sitzbereich des Stators (11) auf der feststehenden Welle (15) erstreckt.

13. Außenläufermotor nach Anspruch 10 oder 11, **dadurch gekennzeichnet, dass** der Kühlmittel-Umlaufkanal (27) als konzentrisch zur Wellenachse angeordneter Ringkanal mit über den Sitzbereich des Stators (11) auf der feststehenden Welle (15) sich erstreckender Kanalbreite ausgebildet ist.

14. Außenläufermotor nach einem der Ansprüche 10 bis 13, **dadurch gekennzeichnet, dass** Kühlmittel-Zulauf- und Kühlmittel-Ablaufkanal (28, 29) als axiale Bohrungen ausgeführt sind, die von dem im Anbauflansch (16) befestigten Wellende her eingebracht sind, und dass in die wellenstirnseitigen Mündungen der Bohrungen jeweils ein Anschlussstutzen (30, 31) eingesetzt ist.

## Claims

1. An external rotor engine comprising a stator (11), a rotor (12) and a position sensor (25) that has a fixed outer sensor part (251) and a rotating inner sensor part (252), the position sensor (25) being accommodated in a fixed shaft (15) supporting the stator (11) and the rotating inner sensor part (252) being connected securely to the rotor (12), **characterised in that** the position sensor (25) is accommodated in a recess (24) made in a face side of a shaft end of the shaft (15) and that a signal line (34) leading to the position sensor (25) is passed through the hollow shaft (15).

2. The external rotor engine according to Claim 1, **characterised in that** the stator (11) is secured, preferably pressed onto the shaft (15) and that heat arising in the stator (11) is discharged via the shaft (15).

3. The external rotor engine according to Claim 2, **characterised in that** a position sensor (25) comprising a fixed outer sensor part (251) and a rotating inner sensor part (252) is accommodated in the fixed shaft (15) and the rotating inner sensor part (252) is connected securely to the rotor (12).

4. The external rotor engine according to any of Claims 1 to 3, **characterised in that** the fixed shaft (15) is fastened by one shaft end within an extension flange (16).

5. The external rotor engine according to Claim 4, **characterised in that** the position sensor (25) is accommodated in the recess (24) made in the face side of the shaft end facing away from the extension flange (16).

6. The external rotor engine according to any of Claims 1 to 5, **characterised in that** the rotor (12) has a hood-shaped rotor housing (17) comprising a hood base (171) and a hood edge (172) and rotatably mounted on the shaft (15), and that the inner sensor part (252) rotatably mounted in the fixed outer sensor part (251) is fastened centrally to the hood base (171).

7. The external rotor engine according to Claim 6, **characterised in that** the rotor housing (17) is supported on the one hand close to the hood base (171) and on the other hand close to the hood edge (172) by a respective antifriction bearing on the fixed shaft (15).

8. The external rotor engine according to Claim 6 or 7, **characterised in that** the rotor housing (17) supports a fastening flange (18) on the hood edge (172) for tying down a load to be driven by the rotor (12).

9. The external rotor engine according to Claim 8, **characterised in that** the antifriction bearing disposed close to the hood edge (172) forms the main bearing of the load tied onto the fastening flange (18) and is preferably in the form of a roller bearing (32).

10. The external rotor engine according to any of Claims 2 to 9, **characterised in that** the shaft (15) has a coolant inlet channel (28) and a coolant discharge channel (29) which are connected to a coolant circulating channel formed in the stator region of the shaft (15) and are guided out of the shaft (15).

11. The external rotor engine according to Claim 10, **characterised in that** the channel walls of the coolant circulating channel (27) lying on the outside in the radial direction are a minimal distance away from the surface of the fixed shaft (15).

12. The external rotor engine according to Claim 10 or 11, **characterised in that** the coolant circulating channel (27) extends like a spiral around the shaft axis over the seat region of the stator (11) on the fixed shaft (15).

13. The external rotor engine according to Claim 10 or 11, **characterised in that** the coolant circulating channel (27) is in the form of an annular channel arranged concentrically to the shaft axis and having a channel width extending over the seat region of the stator (11) on the fixed shaft (15).

14. The external rotor engine according to any of Claims 10 to 13, **characterised in that** the coolant inlet channel and the coolant discharge channel (28, 29) are made as axial bore holes which are made from the shaft end fastened in the extension flange (16) and that a respective connecting piece (30, 31) is inserted into the shaft face-side openings of the bore holes.

## Revendications

1. Moteur à rotor extérieur comprenant un stator (11), un rotor (12) et un indicateur (25) de position, qui a une partie (251) extérieure fixe et une partie (252) intérieure tournante, l'indicateur (25) de position étant logé dans un arbre (15) fixe et portant le stator (11) et la partie (252) intérieure tournante est solidaire du rotor (12), **caractérisé en ce que** l'indicateur (25) de position est logé dans un évidement (24) ménagé dans un côté frontal du bout de l'arbre (15) et **en ce qu'**une ligne (34) de signal menant à l'indicateur (25) de position passe dans l'arbre (15) qui est creux.

2. Moteur à rotor extérieur suivant la revendication 1, **caractérisé en ce que** le stator (11) est fixé sur l'arbre (15), en y étant de préférence appliqué avec pression, et **en ce que** de la chaleur se produisant dans le stator (11) est évacuée par l'arbre (15).

3. Moteur à rotor extérieur suivant la revendication 2, **caractérisé en ce qu'**un indicateur (25) de position, ayant une partie (251) extérieure fixe et une partie (252) intérieure tournante, est logé dans l'arbre (15) fixe et la partie (252) intérieure tournante est solidaire du rotor (12).

4. Moteur à rotor extérieur suivant l'une des revendications 1 à 3, **caractérisé en ce que** l'arbre (15) est, par l'un de ses bouts, fixé dans une bride (16) de montage.

5. Moteur à rotor extérieur suivant la revendication 4, **caractérisé en ce que** l'indicateur (25) de position est logé dans l'évidement (24) ménagé dans le côté frontal du bout de l'arbre, loin de la bride (16) de montage.

6. Moteur à rotor extérieur suivant l'une des revendications 1 à 5, **caractérisé en ce que** le rotor (12) a une carcasse (17) de rotor, qui est montée tournante sur l'arbre (15) et qui est en forme de coiffe, laquelle a un fond (171) et un bord (172) et **en ce que** la partie (252) intérieure de l'indicateur, montée tournante dans la partie (251) extérieure fixe de l'indicateur, est fixée centralement au fond (171) de la coiffe.

7. Moteur à rotor extérieur suivant la revendication 6, **caractérisé en ce que** la carcasse (17) du moteur est appuyée sur l'arbre (15) fixe par respectivement un palier à roulement, d'une part près du fond (171) de la coiffe, et d'autre part près du bord (172) de la coiffe.

8. Moteur à rotor extérieur suivant la revendication 6 ou 7, **caractérisé en ce que** la carcasse (17) du rotor porte, au bord (172) de la coiffe, une bride (18) de fixation pour le montage d'une charge à entraîner par le rotor (12).

9. Moteur à rotor extérieur suivant la revendication 8, **caractérisé en ce que** le palier de roulement, disposé près du bord (172) de la coiffe, forme le palier principal de la charge à relier à la bride (18) de fixation et constitué de préférence sous la forme d'un palier (32) à rouleaux.

10. Moteur à rotor extérieur suivant l'une des revendications 2 à 9, **caractérisé en ce que** l'arbre (15) a un canal (28) d'entrée de fluide de refroidissement et un canal (29) de sortie de fluide de refroidissement, qui communiquent avec un canal de recirculation du fluide de refroidissement formé dans la partie statorique de l'arbre (15) et qui sortent de l'arbre (15).

11. Moteur à rotor extérieur suivant la revendication 10, **caractérisé en ce que** les parois, se trouvant à l'extérieur dans la direction radiale du canal (27) de recirculation de fluide de refroidissement, sont à une distance minimum de la surface de l'arbre (15) fixe.

12. Moteur à rotor extérieur suivant la revendication 10 ou 11, **caractérisé en ce que** le canal (27) de recirculation de fluide de refroidissement s'enroule en spirale autour de l'axe de l'arbre par la partie d'assise du stator (11) sur l'arbre (15) fixe.

13. Moteur à rotor extérieur suivant la revendication 10 ou 11, **caractérisé en ce que** le canal (27) de recirculation de fluide de refroidissement est constitué sous la forme d'un canal annulaire concentrique à l'axe de l'arbre et ayant une largeur s'étendant sur l'arbre (15) fixe par la partie d'assise du stator (11).

14. Moteur à rotor extérieur suivant l'une des revendications 10 à 13, **caractérisé en ce que** le canal (28) d'entrée du fluide de refroidissement et le canal (29) de sortie du fluide de refroidissement sont réalisés sous la forme de trous axiaux, qui sont ménagés à partir du bout de l'arbre fixé dans la bride (16) de montage, et **en ce que** dans les embouchures, du côté frontal de l'arbre, des trous est insérée respectivement une tubulure (30, 31) de raccordement.
